(19) Europäisches Patentamt
European Patent Office
Office européen des brevets

(11) **EP 1 900 515 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(51) Int Cl.:
***B32B 27/36*** *(2006.01)*

(21) Anmeldenummer: **07017280.4**

(22) Anmeldetag: **04.09.2007**

(54) **Weisse, einseitig matte, biaxial orientierte Polyesterfolie, Verfahren zu ihrer Herstellung und ihre Verwendung**

White, biaxially oriented polyester film matt on one side and method for its manufacture and use

Feuille de polyester blanche, mate sur un côté, orientée de manière biaxiale, son procédé de fabrication et d'utilisation

(84) Benannte Vertragsstaaten:
**DE FR GB LU**

(30) Priorität: **13.09.2006 DE 102006042886**

(43) Veröffentlichungstag der Anmeldung:
**19.03.2008 Patentblatt 2008/12**

(73) Patentinhaber: **Mitsubishi Polyester Film GmbH 65203 Wiesbaden (DE)**

(72) Erfinder:
• **Jesberger, Martin, Dr.
55122 Mainz (DE)**
• **Konrad, Matthias, Dr.
65719 Hofheim (DE)**
• **Bröder, Dirk, Dr.
55444 Schweppenhausen (DE)**
• **Hora, Franz
65830 Kriftel (DE)**
• **Hilkert, Gottfried, Dr.
55291 Saulheim (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**EP-A- 1 529 636**

EP 1 900 515 B1

**Beschreibung**

Die Erfindung betrifft eine weiße, einseitig matte, coextrudierte, biaxial orientierte Polyesterfolie, bestehend aus mindestens einer weißen Basisschicht (B) und mindestens einer auf dieser weißen Basisschicht (B) aufgebrachten matten Deckschicht (A). Die Folie zeichnet sich durch eine charakteristische matte Oberfläche der Deckschicht (A) und eine hohe Rauheit aus. Die erfindungsgemäße Folie kann darüber hinaus mindestens eine funktionalisierte Oberfläche aufweisen, wodurch z. B. eine gute Haftung gegenüber anderen Polymer- oder Metall-Schichten oder Druckfarben erzielt wird. Dazu wird diese Oberfläche mit einer haftvermittelnden Schicht in-line beschichtet. Die Erfindung betrifft weiterhin ein Verfahren zur Herstellung der Folie und ihre Verwendung.

Die Verpackungsindustrie hat einen hohen Bedarf an transparenten, hochglänzenden Kunststofffolien wie z. B. biaxial orientierten Polypropylen- oder biaxial orientierten Polyesterfolien. Daneben besteht in zunehmendem Maße ein Bedarf an solchen transparenten Folien, bei denen zumindest eine Oberflächenschicht nicht hochglänzend ist, sondern sich durch ein charakteristisches mattes Erscheinungsbild auszeichnet und dadurch z. B. der Verpackung ein besonders attraktives und damit werbewirksames Aussehen verleiht.

Typische Anwendungen für weiße biaxial orientierte Polyesterfolien sind Deckelanwendungen für "Trays" und Joghurtbecher. Weiße biaxial orientierte Polyesterfolien sind nach dem Stand der Technik hinreichend bekannt.

In der EP-A-0 347 646 wird eine biaxial orientierte Polyesterfolie beschrieben, die mindestens eine Deckschicht A aufweist, die einen Füllstoff in einer Konzentration von 0,5 bis 50 % enthält, wobei der Durchmesser dieses Füllstoffes in einem bestimmten Verhältnis zur Schichtdicke der Deckschicht A steht. Weiterhin weist die Deckschicht A eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über den erzielten Glanz der Deckschicht A gibt die Schrift keine Auskunft. Eine nach der EP-A-0 347 646 (Beispiel 1) hergestellte Folie hatte nicht die gewünschte matte Oberfläche.

In der EP-A-0 053 498 wird eine mehrschichtige, biaxial orientierte Polyesterfolie beschrieben, die eine transparente Basisschicht (B) und auf mindestens einer Seite dieser Schicht eine matt scheinende weitere Schicht (A) aufweist. Diese matt scheinende Schicht besteht im Wesentlichen aus einem Polyethylenterephthalat-Copolyester, der

$H(-OCH_2CH_2-)_nOH$-Einheiten oder
$H(-OCH_2-CH_2-)_{n-1}O-C_6H_4-O-(CH_2-CH_2O-)_{n-1}H$-Einheiten oder
$H(-OCH_2-CH_2-)_{n-1}O-C_6H_4-X-C_6H_4-O-(CH_2-CH_2O-)_{n-1}H$-Einheiten

(n ist eine ganze Zahl von 2 bis 140, X steht für $-CH_2-$,$-C(CH_3)_2-$ oder-$SO_2-$) und inerte anorganische Partikel mit einem mittleren Durchmesser von 0,3 bis 20 $\mu$m in einer Konzentration von 3 bis 40 % enthält, bezogen auf die matt scheinende Schicht. Die Folie zeichnet sich durch einen hohen Mattgrad (Glanz kleiner 15) und eine für gewisse Anwendungen noch akzeptable Transparenz (größer als 60 %) aus. Nachteilig an dieser Folie ist, dass sie im Fall einer ABA-Struktur nicht bedruckbar und im Fall einer AB-Struktur insbesondere nicht auf schnelllaufenden Maschinen zu verarbeiten ist. Außerdem ist sie für viele Anwendungen zu transparent und weist Mängel bei der Herstellung auf.

Ebenfalls bekannt sind nach dem Stand der Technik matte, milchig scheinende, biaxial orientierte Polyesterfolien.

In der DE-A-23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr erneut bei der Folienherstellung eingesetzt werden kann, da ansonsten die Folie gelb wird. Das Verfahren ist damit aber unwirtschaftlich, und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß. Der Weißgrad reicht für viele Anwendungen nicht aus. Die Gelbfärbung der Folie wirkt sich negativ auf das Druckbild aus und ist daher unerwünscht.

In der US-PS 3,154,461 wird eine biaxial orientierte Folie aus thermoplastischem Kunststoff (z. B. Polyethylenterephthalat, Polypropylen) mit matter Oberfläche beansprucht, die inkompressible Partikel (z. B. Calciumcarbonat, Siliciumdioxid) in einer Größe von 0,3 bis 20 $\mu$m und in einer Konzentration von 1 bis 25 % enthält. Für viele transparente Anwendungen ist diese Folie aber zu trüb und für viele weiße Anwendungen zu transparent und der Weißgrad zu gering.

Die EP-B-0 605 130 beschreibt eine mehrschichtige, coextrudierte Verbundfolie mit einer Dicke im Bereich von 30 bis 400 $\mu$m. Die Folie umfasst eine trübe kristalline erste Polyesterschicht, die im Wesentlichen für sichtbares Licht undurchlässig ist, eine Dichte von mehr als 1,30 g/cm³, eine Dicke von größer als oder gleich 25 $\mu$m und einen Verformungsindex von größer als oder gleich 2,5 % aufweist. Der Verformungsindex wird bei einer Temperatur von 200 °C und unter einem Druck von 2 MPa gemessen. Daneben umfasst die Folie eine transparente, kristalline zweite Polyesterschicht, die "substantially permeable to visible light" ist und eine TOD (transmission optical density) von 0.005 bis 0.2 aufweist. Weiterhin ist im Sinne der Erfindung eine Transparenz dieser Schicht noch gegeben, wenn in ihr weniger als 2 % Partikel vorhanden sind, die eine Teilchengröße von 0,1 bis 10 $\mu$m haben. Die Folie zeichnet sich durch eine gute Opazität aus, sie weist jedoch Defizite bei ihrer Herstellung (keine optimale Rollenaufmachung), bei ihrer Verarbeitung zu Deckeln und insbesondere in den optischen Eigenschaften auf.

Die EP-A-1 176 004 beschreibt eine weiße biaxial orientierte, in der Regel einschichtige Polyesterfolie mit einer Basisschicht (B), die sich auf Grund ihrer speziellen mechanischen Eigenschaften sehr gut als Deckelfolie, insbesondere als Deckelfolie für Joghurtbecher, eignet. Die Folie ist dadurch gekennzeichnet, dass der R-Wert kleiner/gleich 45 N/mm$^2$ und das $e_{max}$-Verhältnis kleiner/gleich 2,5 ist. Durch das Einhalten dieser Werte neigt die Folie weniger zum Delaminieren und zeigt ein gutes Abziehverhalten vom Becher. Die Folie zeichnet sich weiterhin durch eine gute Opazität aus, sie weist jedoch noch Defizite bei ihrer Herstellung (keine optimale Rollenaufmachung) und in den optischen Eigenschaften auf.

Die EP 1 529 636 offenbart bereits, dass es bekannt war, zur Herstellung einer weißen, heißsiegelbaren und peelfähigen Polyesterfolie eine weiße Basisschicht mit einer heißsiegelbaren, peelfähigen Deckschicht zu kombinieren, die eine Menge von 1 bis 10 Gew.-% anorganische oder organische Partikel mit einem mittleren Durchmesser von 2,5 bis 12 $\mu$m enthält. Außerdem war aus der Schrift bekannt, dass das Weißpigment der Basisschicht ein Titandioxid wahlweise vom Rutil-Typ oder Anatas-Typ ist und eine Korngröße von 0,05 bis 0,5 $\mu$m besitzt, und dass der Polyester der Deckschicht eine Menge im Bereich von 0 bis 25 Gew.-% an Isophthalateinheiten enthalten kann. Die Folie nach dem Stand der Technik lässt aber in Bezug auf ihren Mattgrad, also ihrem niedrigen Glanz an der Oberfläche, noch zu wünschen übrig.

Aufgabe der vorliegenden Erfindung war es daher, eine weiße mindestens einseitig matte, biaxial orientierte Polyesterfolie bereitzustellen, die die Nachteile der genannten Folien aus dem Stand der Technik nicht aufweist und sich insbesondere durch einen hohen Mattgrad - bei gleichzeitig niedriger Transparenz - und hohen Weißgrad, eine sehr gute Herstellbarkeit und eine sehr gute Verarbeitbarkeit auszeichnet. Bei der Herstellung der Folie sollte weiterhin gewährleistet sein, dass bei der Folienherstellung anfallendes Verschnittmaterial als Regenerat wieder dem Herstellprozess zurückgeführt werden kann, ohne dass dabei die physikalischen und optischen Eigenschaften der Folie nennenswert negativ beeinflusst werden.

Gelöst wird diese Aufgabe durch eine

Polyesterfolie, die mindestens eine weiße Basisschicht (B) und mindestens eine matte Deckschicht (A) aufweist, dadurch gekennzeichnet, dass

a. die Basisschicht (B) Weißpigment in einer Konzentration von 3 bis 15 Gew.-% enthält (bezogen auf das Gewicht der Basisschicht (B)),
b. die Deckschicht (A) Weißpigment in einer Konzentration von 2 bis 15 Gew.-% enthält (bezogen auf das Gewicht der Deckschicht (A)) und
c. die Deckschicht (A) weitere, von dem Weißpigment verschiedene Partikel enthält, die einen mittleren Partikeldurchmesser $d_{50}$ von 2 bis 10 $\mu$m aufweisen, und
d. die Deckschicht (A) aus einem Polyester aufgebaut ist, der 4 bis 30 Mol-% Isophthalsäureeinheiten und 70 bis 96 Mol-% Terephthalsäureeinheiten aufweist (bezogen auf die Gesamtsäuremenge des Polyesters in dieser Schicht).

Gegebenenfalls trägt zumindest eine der beiden Folienoberflächen eine funktionsvermittelnde Beschichtung oder ist funktionsvermittelnd behandelt. Diese Beschichtung wird bevorzugt als wässrige Dispersion auf die Folie aufgebracht. In einer bevorzugten Ausführung wird die funktionsvermittelnde Beschichtung auf die matte Deckschicht (A) aufgetragen.

Erfindungsgemäß ist die Folie zumindest zweischichtig und umfasst dann als Schichten die Basisschicht (B) und die matte Deckschicht (A). In einer bevorzugten Ausführungsform der Erfindung ist die Folie dreischichtig aufgebaut und weist auf der einen Seite der Schicht (B) (= Basisschicht) die erfindungsgemäße Deckschicht (A) und auf der anderen Seite der Schicht (B) eine weitere Schicht (C) auf. In diesem Fall bilden die beiden Schichten (A) und (C) die Deckschichten (A) und (C). Die erfindungsgemäße Folie weist darüber hinaus gegebenenfalls auf zumindest einer Folienoberfläche eine funktionsvermittelnde Beschichtung auf, die bevorzugt als wässrige Dispersion auf die Folie aufgebracht wird.

**Basisschicht (B)**

Die Basisschicht (B) der Folie enthält bevorzugt mindestens 80 Gew.-% thermoplastischen Polyester, insbesondere mindestens 90 Gew.-% thermoplastischen Polyester, bezogen auf das Gesamtgewicht dieser Schicht. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterephthalat-Homopolymer. Die restlichen Monomereinheiten stammen aus anderen aliphatischen, cycloaliphatischen oder aromatischen Diolen bzw. anderen Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Basisschicht (B) enthält außerdem ein Weißpigment in einer Konzentration von 3 bis 15 Gew.-%, bevorzugt von 4 bis 14 Gew.-% und besonders bevorzugt von 5 bis 13 Gew.-%.

Die durch Coextrusion auf die Basisschicht (B) aufgebrachte matte Deckschicht (A) ist bevorzugt überwiegend auf Basis von Polyester aufgebaut. Erfindungsgemäß enthält die matte Deckschicht (A) einen Polyester, der 4 bis 30 Mol-% Isophthalsäure, bevorzugt 6 bis 28 Mol-% Isophthalsäure und besonders bevorzugt 8 bis 26 Mol-% Isophthalsäure, bezogen auf die Gesamtsäuremenge des Polyesters in dieser Schicht, enthält. Die restlichen Monomereinheiten stammen aus anderen aliphatischen, cycloaliphatischen oder aromatischen Dicarbonsäuren bzw. Diolen, wie sie auch in der Basisschicht vorkommen können und dort bereits beschrieben worden sind.

Die matte Deckschicht (A) enthält ein Weißpigment in einer Konzentration von 2 bis 15 Gew.-%, bevorzugt von 3 bis 14 Gew.-% und besonders bevorzugt von 4 bis 13 Gew.-%. Darüber hinaus enthält die Deckschicht (A) Partikel in einer Konzentration von 1 bis 7 Gew.-%, wobei diese Partikel von Weißpigmenten verschiedene Partikel sind.

Die Rohstoffe für die Deckschicht (A) lassen sich beispielsweise über Copolymerisation der einzelnen Monomere oder über Masterbatche verschiedener Einzelpolymere als Mischung bzw. als Blend herstellen.

In einer bevorzugten Ausführungsform der Erfindung enthält die matte Deckschicht (A) einen Copolyester, der aus Terephthalat- und Isophthalat-Einheiten und aus Ethylenglykol-Einheiten aufgebaut ist. Der Anteil an Terephthalat-Einheiten in diesem Copolyester, bezogen auf die Gesamtsäuremenge, beträgt bevorzugt 70 bis 96 Mol-% und der entsprechende Anteil an Isophthalat-Einheiten 30 bis 4 Mol-%. Besonders bevorzugt sind hierunter solche Copolyester, bei denen der Anteil an Terephthalat-Einheiten 72 bis 94 Mol-% und der entsprechende Anteil an Isophthalat-Einheiten 6 bis 28 Mol-% beträgt. Ganz bevorzugt sind solche Copolyester, bei denen der Anteil an Terephthalat-Einheiten 74 bis 92 Mol-% und der entsprechende Anteil an Isophthalat-Einheiten 6 bis 26 Mol-% beträgt.

Falls vorhanden, werden für den restlichen Anteil der in der Deckschicht (A) vorhandenen Polymere prinzipiell die gleichen Polymere verwendet wie sie zuvor für die Basisschicht (B) beschrieben wurden.

**Weißpigment**

Zur Erzielung der vorgenannten Eigenschaften, insbesondere des gewünschten Weißgrades der Folie, werden in die Basisschicht (B) und zumindest in eine Deckschicht (A), eventuell aber auch in vorhandene andere Schichten, die notwendigen Weißpigmente eingearbeitet. In Frage kommen z. B. Titandioxid, Bariumsulfat, Zinksulfid oder Zinkoxid. In bevorzugter Weise wird $TiO_2$ als alleiniges weißfärbendes Pigment verwendet. Es wird in der bevorzugten Ausführungsform als Extrusionsmasterbatch dem Originalrohstoff (Polyester) zugegeben. Typische Bereiche für die $TiO_2$-Konzentration im Extrusionsmasterbatch sind 20 bis 70 Gew.-%. Das Titandioxid kann sowohl vom Rutil-Typ als auch vom Anatas-Typ oder eine Mischung aus Rutil- und Anatas-Typ sein. Vorzugsweise wird in der Basisschicht und in der Deckschicht Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente in den vorgesehenen Konzentrationen ein brillantes weißes Aussehen.

Überraschenderweise hat sich gezeigt, dass man bei Verwendung der zuvor beschriebenen Rohstoffe, insbesondere bei der Verwendung von der Isophthalsäure in der angegebenen Konzentration, für die Deckschicht (A) eine Folie mit besonders hoher Rauheit und niedrigem Glanz erhält.

Zur Erzielung der gewünschten Mattheit/des gewünschten Mattgrades enthält die weiße Deckschicht (A) neben dem Weißpigment zusätzlich - von Weißpigmenten verschiedene - Partikel, die durch folgenden Satz von bevorzugten Parametern gekennzeichnet sind:

1) Erfindungsgemäß enthält die matte Deckschicht (A) Partikel mit einem Partikeldurchmesser $d_{50}$ von 2,0 bis 10 $\mu$m. Es hat sich als besonders vorteilhaft erwiesen, Teilchen mit einem mittleren Partikeldurchmesser $d_{50}$ von 2 bis 10 $\mu$m, besonders bevorzugt von 2,4 bis 8,0 $\mu$m und ganz besonders bevorzugt von 2,6 bis 7,0 $\mu$m zu verwenden. Bei der Verwendung von Teilchen mit einem Durchmesser, der unterhalb 2,0 $\mu$m liegt, ist die Rauigkeit der Folie zu niedrig und der Glanz zu hoch. Teilchen mit einem Durchmesser größer als 10 $\mu$m verursachen in der Regel Filterprobleme.

2) Erfindungsgemäß enthält die Deckschicht (A) Partikel in einer Konzentration von 1 bis 7 Gew.-%, bezogen auf das Gesamtgewicht dieser Schicht. Bevorzugt beträgt die Konzentration der Partikel 1,5 bis 6,5 Gew.-% und besonders bevorzugt 2 bis 6 Gew.-%. Enthält die Deckschicht (A) der Folie dagegen Partikel in einer Konzentration von weniger als 1 Gew.-%, so ist der Mattgrad nicht ausreichend, der Glanz ist zu hoch. Enthält dagegen die Deckschicht (A) der Folie Partikel in einer Konzentration von mehr als 7 Gew.-%, so wird die homogene Einarbeitung der Partikel erschwert und kann zu unerwünschten Inhomogenitäten in der Oberfläche führen.

Typische, den Mattgrad der Folie begünstigende und damit bevorzugte Partikel sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Kaolin oder vernetzte Polymerpartikeln, z. B. Polystyrol- oder Acrylat-Partikel.

Daneben können auch Mischungen von zwei oder mehreren verschiedenen Partikeln oder Mischungen von Partikeln mit gleicher chemischer Zusammensetzung, aber unterschiedlicher Partikelgröße gewählt werden. Die Partikel können den Polymeren der einzelnen Schichten der Folie in den jeweils vorteilhaften Konzentrationen, z. B. als glykolische Dispersion während der Polykondensation oder über Masterbatche bei der Extrusion, zugegeben werden.

Bevorzugte Partikel sind synthetisch hergestellte $SiO_2$-Partikel (in kolloidaler Form). Diese Partikel werden sehr gut in die Polymermatrix eingebunden. Hersteller solcher Partikel sind z. B. die Firmen Grace (US), Fuji (JP), Degussa (DE) oder Ineos (GB).

Um zu dem gewünschten Weißgrad (> 75, bevorzugt > 80, besonders bevorzugt >85) und zu der gewünschten niedrigen Transparenz (< 50 %, bevorzugt < 45 %, besonders bevorzugt <40 %) der Folie zu gelangen, sollte die Basisschicht (B) hochgefüllt sein.

Liegt der Weißgrad unterhalb von 75, so erscheint die Folie dem Beobachter nicht weiß genug. Die Folie wird dadurch weniger werbewirksam, und das Druckbild erscheint nicht mehr so brillant.

Liegt die Transparenz über 50 %, so erscheint die Folie milchig weiß. Das unter der Folie befindliche Lebensmittel ist zu erkennen. Die Durchlässigkeit von Licht hat einen bedeutenden Einfluss auf die Haltbarkeit bestimmter Lebensmittel. Weniger lichtdurchlässige Lebensmittelverpackungen haben bei lichtempfindlichen Lebensmitteln oft eine deutlich höhere Haltbarkeit.

Zu einer weiteren Steigerung des Weißgrades können in einer bevorzugten Ausführungsform geeignete optische Aufheller der Basisschicht und/oder den anderen Schichten zugesetzt werden. Geeignete optische Aufheller sind beispielsweise Hostalux® KS der Firma Clariant oder Eastobrite® OB-1 der Firma Eastman.

Die matte Deckschicht (A) wird in einer bevorzugten Ausführungsform weiterhin durch den folgenden Satz von Parametern gekennzeichnet:

1) Die Rauigkeit der matten Seite der Folie, ausgedrückt durch ihren $R_a$-Wert, liegt im Bereich von 150 bis 1000 nm, bevorzugt von 175 bis 950 nm, besonders bevorzugt von 200 bis 900 nm. Kleinere Werte als 150 nm haben negative Auswirkungen auf den Mattheitsgrad der Oberfläche, größere Werte als 1000 nm beeinträchtigen die optischen Eigenschaften der Folie.

2) Die Oberfläche der matten Seite der Folie weist >100 bis <1500 Erhebungen pro $mm^2$ auf, die größer als 1,5 $\mu$m sind.

Die Basisschicht (B) kann ebenfalls zusätzlich übliche Additive wie beispielsweise Stabilisatoren und/oder Partikel (= Füller) enthalten. Als Stabilisatoren werden vorteilhaft beispielsweise Phosphorverbindungen wie Phosphorsäure oder Phosphorsäureester eingesetzt.

Typische Partikel (Füller) für die Basisschicht (B) sind die für die Deckschicht(en) angegebenen anorganischen und/oder organischen Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Kaolin oder vernetzte Polystyrol- oder Acrylat-Partikel.

In der bevorzugten Verwendungsform besteht die Folie aus drei Schichten, der Basisschicht (B) und beidseitig auf dieser Basisschicht aufgebrachten Deckschichten (A) und (C), wobei die Deckschichten (A) und (C) gleich oder verschieden sein können. Die Deckschicht (C) enthält bevorzugt die für die Basisschicht (B) beschriebenen Polymeren. Insbesondere enthält die Schicht (C) bevorzugt die oben genannten Füller (Partikel), um das Verarbeitungsverhalten der Folie weiter zu verbessern.

Zwischen der Basisschicht (B) und den Deckschichten (A) und/oder (C) können sich gegebenenfalls noch eine oder mehrere Zwischenschichten befinden. Diese können wiederum aus den für die Basisschicht (B) beschriebenen Polymeren bestehen. In einer besonders bevorzugten Ausführungsform besteht die Zwischenschicht aus dem für die Basisschicht (B) verwendeten Polyester. Die Zwischenschicht kann auch die beschriebenen üblichen Additive enthalten. Die Dicke der Zwischenschicht ist im Allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Bei der besonders vorteilhaften dreischichtigen Ausführungsform der erfindungsgemäßen Folie liegt die Dicke der Deckschichten (A) und (C) im Allgemeinen im Bereich von 0,1 bis 5,0 $\mu$m, bevorzugt im Bereich von 0,3 bis 4,5 $\mu$m und besonders bevorzugt im Bereich von 0,5 bis 4,0 $\mu$m, wobei die matte Deckschicht (A) und die Deckschicht (C) gleich oder verschieden dick sein können.

Die Gesamtdicke der erfindungsgemäßen Polyesterfolie kann innerhalb weiter Grenzen variieren. Sie liegt in der Regel im Bereich von 5 bis 500 $\mu$m, insbesondere von 8 bis 400 $\mu$m, vorzugsweise von 10 bis 300 $\mu$m.

Zusammengefasst zeichnet sich die erfindungsgemäße Folie insbesondere durch einen niedrigen Glanz der Folienoberfläche (A), durch eine vergleichsweise hohe Rauheit und eine niedrige Transparenz aus. Außerdem besitzt sie ein gutes Wickel- und Verarbeitungsverhalten.

Die erfindungsgemäße Folie eignet sich als Verpackungsmaterial für Nahrungs- und Genussmittel, insbesondere als Deckelfolie für Lebensmittelbehältnisse wie z. B. Joghurtbecher. Die Folie eignet sich daneben hervorragend zur Verpackung von feuchtigkeits- und/oder luftempfindlichen Nahrungs- und Genussmitteln, die ebenfalls in solchen Bechern enthalten sein können.

Der Glanz der Folienoberfläche (A), gemessen bei einem Einfallswinkel von 60°, ist niedriger als 50. In einer bevorzugten Ausführungsform beträgt der Glanz dieser Seite weniger als 45 und in einer besonders bevorzugten Ausführungsform weniger als 40. Der Weißgrad der Folie, gemessen wurde der Weißgrad nach Berger, ist größer als 75, bevorzugt größer als 80 und besonders bevorzugt größer als 85.

Die Erfindung betrifft auch ein Verfahren zur Herstellung der erfindungsgemäßen Polyesterfolie nach dem aus der Literatur bekannten Coextrusionsverfahren.

Im Rahmen dieses Verfahrens wird so vorgegangen, dass die den einzelnen Schichten (A), (B) und gegebenenfalls (C) der Folie entsprechenden Schmelzen durch eine Flachdüse coextrudiert und zu Schmelzefilmen ausgeformt werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst werden, wie beim Coextrusionsverfahren üblich, das Polymere bzw. die Polymermischungen für die einzelnen Schichten in je einem Extruder komprimiert und verflüssigt, wobei die gegebenenfalls als Zusätze vorgesehenen Additive bereits im Polymer bzw. in der Polymermischung enthalten sein können. Bevorzugt werden diese Additive in Form von Masterbatches dem Ausgangspolymer zugesetzt. Die Schmelzen werden dann gleichzeitig durch eine Flachdüse (Breitschlitzdüse) gepresst, und die ausgepresste, mehrschichtige Schmelze wird auf einer oder mehreren Abzugswalzen abgezogen, wobei die Schmelze abkühlt und sich zu einer Vorfolie verfestigt.

Die biaxiale Streckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in den die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 5:1, bevorzugt von 3:1 bis 4,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von ca. 180 bis 250 °C gehalten. Anschließend wird die Folie in üblicher Weise aufgewickelt.

Wie bereits eingangs erwähnt kann mindestens eine Folienoberfläche funktionsvermittelnd beschichtet und/oder behandelt sein. Der Kontaktwinkel dieser beschichteten/behandelten Oberfläche zu Wasser beträgt ≤ 64°, bevorzugt ≤ 62° und besonders bevorzugt ≤ 60°. Diese beschichtete/behandelte Oberfläche weist insbesondere ein erhöhtes Haftvermögen gegenüber anderen Materialien auf.

Dies wird durch eine Corona- bzw. Flammbehandlung erreicht, die sich üblicherweise an die Thermofixierung der Folie anschließt. Ebenso kann die Behandlung an anderen Stellen im Folienherstellprozess, beispielsweise nach der Längsstreckung, erfolgen. Alternativ oder zusätzlich zu der oben beschriebenen Oberflächenbehandlung kann die Folie auf einer (oder beiden) Oberfläche(n) mit einer funktionalen Beschichtung beschichtet werden, so dass die Beschichtung auf der fertigen Folie eine Dicke von bevorzugt 5 bis 2000 nm, insbesondere 20 bis 500 nm und besonders bevorzugt 30 bis 200 nm aufweist. Die Beschichtung wird bevorzugt in-line aufgebracht, d. h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtung äußerst homogen in Schichtdicken bis 200 nm auftragen lässt. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion; beispielsweise wird die Folie dadurch siegelfähig, bedruckbar, metallisierbar, sterilisierbar, antistatisch, oder sie verbessern z. B. die Aromabarriere oder ermöglichen die Haftung zu Materialien, die ansonsten nicht auf der Folienoberfläche haften würden. Beispiele für Stoffe/Zusammensetzungen, die zusätzliche Funktionalität verleihen, sind: Acrylate, wie sie beispielsweise beschrieben sind in der WO 94/13476, Ethylenvinylalkohole, PVDC, Wasserglas ($Na_2SiO_4$), hydrophilische Polyester (5-Na-sulfoisophthalsäurehaltiger PET/IPA Polyester, wie sie beispielsweise beschrieben sind in der EP-A-0 144 878, USA-4,252,885 oder EP-A-0 296 620), Polyvinylacetate, wie sie beispielsweise beschrieben sind in der WO 94/13481, Polyurethane, Alkali- oder Erdalkalisalze von $C_{10}$-$C_{18}$-Fettsäuren, Butadiencopolymere mit Acrylnitril oder Methylmethacrylat, Methacrylsäure oder deren Ester.

Die genannten Stoffe/Zusammensetzungen werden als verdünnte Lösung, Emulsion oder Dispersion, vorzugsweise als wässrige Lösung, Emulsion oder Dispersion, auf eine oder beide Folienoberflächen aufgebracht, und anschließend wird das Lösungsmittel verflüchtigt. Werden die Beschichtungen in-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von

(1) Isophthalsäure,
(2) einer aliphatischen Dicarbonsäure mit der Formel

$$HOOC(CH_2)_nCOOH,$$

wobei n im Bereich von 1 bis 11 liegt,
(3) einem Sulfomonomeren enthaltend eine Alkalimetallsulfonatgruppe an dem aromatischen Teil einer aromatischen Dicarbonsäure und
(4) wenigstens einem aliphatischen oder cycloaliphatischen Alkylenglykol mit etwa 2 bis 11, bevorzugt 2 bis 8, besonders bevorzugt 2 bis 6 Kohlenstoffatomen hergestellt.

Die insgesamt anwesenden Säureäquivalente sollen auf molarer Basis im Wesentlichen den insgesamt anwesenden Glykoläquivalenten entsprechen.

Es hat sich gezeigt, dass die verhältnismäßigen Anteile der Komponenten (1), (2), (3) und (4), die zur Herstellung der bevorzugten Copolyesterbeschichtungen eingesetzt werden, entscheidend für das Erzielen einer beschichteten Folie mit zufriedenstellender Haftung sind. So sollte bevorzugt z. B. Isophthalsäure (Komponente 1) zu mindestens etwa 65 Mol-% als Säurekomponente anwesend sein. Bevorzugt ist die Komponente (1) reine Isophthalsäure, die in einer Menge von etwa 70 bis 95 Mol-% anwesend ist. Für die Komponente (2) gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente (3) in der Zusammensetzung enthalten ist. Das die Komponente (3) der bevorzugten Copolyesterbeschichtung bildende Monomere sollte bevorzugt in einer Menge von wenigstens 5 Mol-% in diesem System enthalten sein, damit die Grundierung mit Wasser dispergierbar wird. Besonders bevorzugt liegt die Menge an Monomerem der Komponente (3) bei etwa 6,5 bis 12 Mol-%. Die Glykolkomponente (4) ist in ungefähr stöchiometrischer Menge (bezogen auf die anwesenden Säurekomponenten) anwesend.

In einer weiteren bevorzugten Ausführungsform der Erfindung wird eine Acrylatbeschichtung zur Erzielung der besseren Haftung verwendet. Die bevorzugt verwendeten Acrylcopolymeren bestehen im Wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist.

Die acrylische Komponente der Haftvermittlercopolymeren ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterrolle und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat-Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden wie z. B. N- Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Harnstoff-FormaldehydKondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden:

1. eine Mischung aus einem aromatischen Copolyester (I-1) mit einer in Wasser dispergierbaren funktionellen Gruppe und einem Polyvinylalkohol (II-1),
2. eine Mischung aus einem aromatischen Copolyester (I-2) mit einer in Wasser dispergierbaren funktionellen Gruppe und einem Polyglycerolpolyglycidylether (II-2) oder
3. eine Mischung aus einem wässrigen Polyurethan (I-3) und einem Polyvinylalkohol (II-3).

Die aromatischen Copolyester (I-1 und I-2) werden aus aromatischen Dicarbonsäuren wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9 % betragen. Als Polyglycerolpolyglycidylether (II-2) werden Reaktionsprodukte von Glycerin und Epichlorhydrin mit Molekulargewichten zwischen ca. 250 und 1200 g/mol verwendet. Das wässrige Polyurethan (I-3) wird aus einem Polyol, wie zum Beispiel Polyester mit Glykol-Endgruppen, Polyoxyethylenglykol, Polyoxypropylenglykol, Polyoxytetramethylenglykol oder acrylische Polylole, und einem Diisocyanat, wie zum Beispiel Xyloldiisocyanat, Hexamethylendiisocyanat, 4,4'- Dicyclohexylmethandiisocyanat, Toluidindiisocyanat, Phenylendiisocyanat, 4,4'- Diphenylmethandiisocyanat und 1,5-Naphthalindiisocyanat hergestellt.

In einer weiteren bevorzugten Ausführungsform der Erfindung besteht die haftvermittelnde Schicht aus einem aminofunktionalen Silan, welches die Folie zusätzlich dampfsterilisierfest macht (ein Laminat z. B. aus Folie, Beschichtung, Kleber oder aufgebrachten metallischen und keramischen Schichten delaminiert nicht) und darüber hinaus für die direkte Extrusionsbeschichtung mit Polymeren aufnahmebereit macht.

Generell wird das aminofunktionale Silan in Wasser hydrolysiert und auf eine oder mehrere Oberflächen des orientierten Polyesters mit konventionellen Methoden wie Sprüh- oder Rollenbeschichtung aufgebracht. Wenn die Silanbeschichtung einmal getrocknet ist, ist der so grundierte Polyester dampfsterilisierbar und aufnahmefähig für die direkte Extrusion mit anderen Polymeren. Die Extrusionsbeschichtung kann mit einem konventionellen Prozess durchgeführt werden.

Im weitesten Sinne zielt die vorliegende Erfindung in dieser Hinsicht auf eine orientierte Polyesterfolie ab, die eine haftvermittelnde Schicht aufweist, die es ermöglicht, dass die Folie dampfsterilisierbar und für die direkte Extrusionsbeschichtung aufnahmefähig wird. Die haftvermittelnde Schicht wird in ihrem unhydrolysierten Zustand durch folgende generelle Formel beschrieben:

$$(R^1)_a Si(R^2)_b(R^3)_c.$$

Die Erfindung umfasst auch ein dampfsterilisierbares Laminat bestehend aus einer orientierten Polyesterfolie, einer haftvermittelnden Schicht und einem direkt darauf extrudierten Polymer.

Silane sind nach der Hydrolyse wasserlöslich oder können in Wasser dispergiert werden, wobei aminofunktionale Silane besonders gut wasserlöslich sind. Es wurde gefunden, dass Aminosilane eine gute Haftung zu Farben, Klebern, Primern und metallischen und keramischen Schichten auch nach der Dampfsterilisation aufweisen und ebenso eine gute Haftung von extrusionsbeschichteten Polymeren zu Polyesterfolien ohne eine zusätzliche haftvermittelnde Schicht oder Corona-Behandlung vermitteln können. Der Verschnitt von Polyesterfolie mit Aminosilan-Beschichtung kann regeneriert werden.

Aminofunktionale Silane, die für den Zweck dieser Erfindung genutzt werden können, werden in ihrer nicht hydrolysierten Form durch folgende Formel beschrieben:

$$(R^1)_a Si(R^2)_b(R^3)_c,$$

wobei $R^1$ zumindest eine Aminogruppe enthält; $R^2$ ist eine hydrolysierbare Gruppe ausgewählt aus kurzkettigen Alkoxy-Gruppen mit 1 bis 8 Kohlenstoffatomen, einer Acetoxy-Gruppe oder Halogeniden; und $R^3$ ist eine unreaktive, nicht hydrolysierbare Gruppe, entweder eine kurzkettige Alkyl-Gruppe mit 1 bis 8 Kohlenstoffatomen oder eine Phenylgruppe; mit (a) größer oder gleich 1; (b) größer oder gleich 1; (c) größer oder gleich 0 und a+b+c = 4.

Beispiele von Aminosilanen, die zu dieser Formel passen, sind N-2-(Aminoethyl)-3-aminopropyltrimethoxysilan, 3-Aminopropyltrimethoxysilan, 4-Aminobutyltriethoxysilan, 4-Aminobutyldimethylmethoxysilan, und p-Aminophenyltrimethoxysilan. Das bevorzugte Silan ist N-2-(Aminoethyl)-3-aminopropyltrimethoxysilan mit der folgenden Formel:

$$H_2N(CH_2)_2NH(CH_2)_3Si(OCH_3)_3.$$

Das hydrolysierte Aminosilan kann prinzipiell zu jedem möglichen Zeitpunkt bei der Herstellung der Folie aufgetragen werden, d. h. vor oder während des Streckprozesses, es kann auch auf die fertige Folie (z. B.) vor der Aufrollung aufgetragen werden.

Die haftvermittelnde Schicht wird durch die Mischung von Aminosilan mit Wasser bevorzugt in einem Bereich von 0,2 bis 6 Gew.-% hergestellt. Optional kann eine schwache Säure wie z. B. Essigsäure zugefügt werden, um die Hydrolyse zu fördern. Zumindest eine der hydrolysierbaren Gruppen des Silans wird zu einer Silanol-Gruppe (SiOH) hydrolysiert. Es wird angenommen, dass das Hydrolyseprodukt des Aminosilans eine partiell hydrolysierte cyclische Struktur hat, wobei die Amino-Gruppe wahrscheinlich ionische Bindungen zum Silizium-Teil des Moleküls bildet. Folglich bezieht sich der Terminus hydrolysiert, der hier verwendet wird, auch auf diese teilweise hydrolysierten Strukturen.

Die oben beschriebene erfindungsgemäße Beschichtung ist ausführlich in der EP-B-0 359 017 (Seiten 3 bis 5) dargestellt, auf die an dieser Stelle ausdrücklich Bezug genommen wird. Diese Schrift gibt auch Auskunft über weitere spezifische Kombinationen solcher hydrolisierbaren Aminosilane.

Die bevorzugten Copolyester-, Acrylat-, Silan- und hydrophilen Beschichtungen können weiterhin andere bekannte Zusätze enthalten wie z. B. Antistatika, Netzmittel, Tenside, pH-Regulatoren, Antioxidantien, Anti-Blockmittel wie z. B. kolloidales $SiO_2$ usw.

Die erfindungsgemäße Folie zeichnet sich insbesondere durch hervorragende optische Eigenschaften, d. h. einen niedrigen Glanz und niedrige Transparenz, ein sehr gutes Handling und durch ein sehr gutes Verarbeitungsverhalten aus.

Daneben ist bei der Herstellung der Folie gewährleistet, dass Verschnittmaterial, das bei der Herstellung der Folie in größeren Mengen anfällt, als Regenerat in einer Menge im Bereich von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in der flexiblen Verpackung, und zwar insbesondere dort, wo ihre hervorragenden optischen Eigenschaften und ihre gute Verarbeitbarkeit voll zum Tragen kommen wie z. B. beim Einsatz auf schnelllaufenden Verpackungsmaschinen.

Die nachstehende Tabelle (Tabelle 1) fasst die wichtigsten erfindungsgemäßen und bevorzugten Folieneigenschaften noch einmal zusammen:

**Tabelle 1**

| Basisschicht B | | | | | |
|---|---|---|---|---|---|
| | bevorzugter Bereich | besonders bevorzugt | ganz besonders bevorzugt | Einheit | Messmethode |
| Konzentration an weißfärbendem Füllstoff | 3 bis 15 | 4 bis 14 | 5 bis 13 | Gew.-% | |
| Deckschicht A (matte Deckschicht) | | | | | |
| Konzentration an Weißpigment | 2 bis 15 | 3 bis 14 | 4 bis 13 | Gew.-% | |
| Isophthalatgehalt des Polymers | 4 bis 30 | 6 bis 28 | 8 bis 26 | Mol-% | |
| Füllstoffkonzentration des zusätzlichen Partikels | 1 bis 7 | 1,5 bis 6,5 | 2 bis 6 | Gew.-% | |
| Partikeldurchmesser $d_{50}$ des weiteren Pigmentsystems | 2 bis 10 | 2,4 bis 8,0 | 2,6 bis 7,0 | $\mu$m | wie beschrieben |
| Mittlere Rauigkeit $R_a$ der matten A-Seite | 150 bis 1000 | 175 bis 950 | 200 bis 900 | nm | DIN 4768 |
| Reibungswert COF A-Seite gegen A-Seite | < 0,5 | < 0,45 | < 0,40 | | DIN 53375 |
| Topographie | > 100, < 1500 | > 150, < 1250 | > 200, < 1000 | Erhebungen pro $mm^2$ > 1,5 $\mu$m | wie beschrieben |
| Dicke der Deckschicht A | 0,1 bis 5,0 | 0,3 bis 4,5 | 0,5 bis 4,0 | $\mu$m | |
| Eigenschaften der Folie | | | | | |
| | bevorzugter Bereich | besonders bevorzugt | ganz besonders bevorzugt | Einheit | Messmethode |
| Dicke der Folie | 5 bis 500 | 8 bis 400 | 10 bis 300 | $\mu$m | |
| Weißgrad der Folie nach Berger | >75 | >80 | >85 | | s. Beschreibung |
| Transparenz der Folie | <50 | <45 | <40 | % | ASTM-D 1003-00 |
| Glanz der Deckschicht A bei 60° (unbeschichtet) | <50 | <45 | <40 | | DIN 67530 |
| Kontaktwinkel von Wasser auf behandelter Folienoberfläche | $\leq$64 | $\leq$62 | $\leq$60 | ° | wie beschrieben |

Zur Charakterisierung der Rohstoffe und der Folien wurden die folgenden Messmethoden benutzt:

DIN = Deutsches Institut für Normung
ASTM = American Society for Testing and Materials

**SV-Wert (Standard Viskosität)**

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität.

$$IV [\eta] = 6{,}907 \cdot 10^{-4}\ SV\ (DCE) + 0{,}063096\ [dl/g]$$

**Glanz**

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

**Rauigkeit**

Die Rauigkeit $R_a$ der Folie wird nach DIN 4768 bei einem Cut-off von 0,25 mm bestimmt. Es wird dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

**Messung des mittleren Durchmessers $d_{50}$ (mittlerer Partikeldurchmesser)**

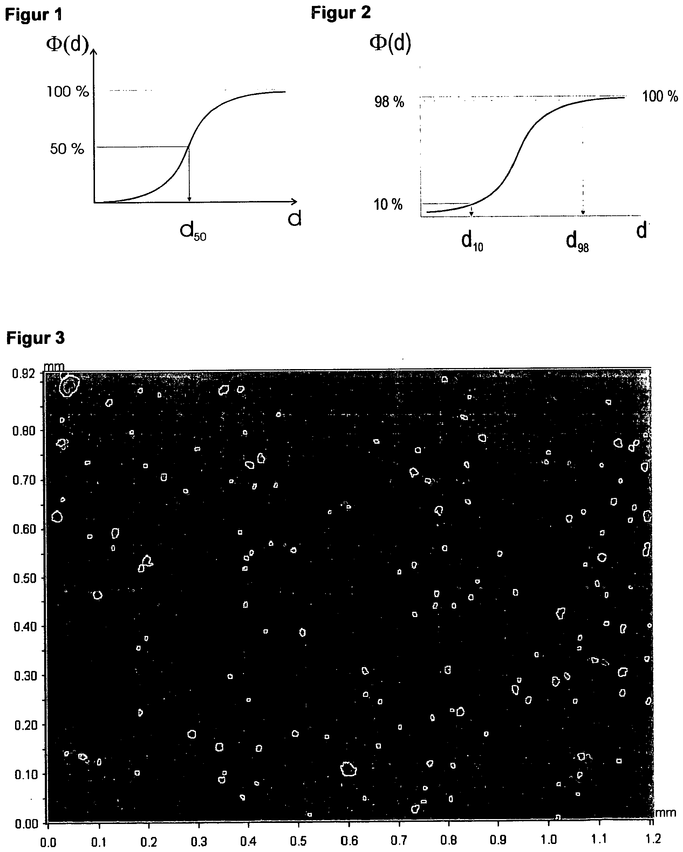

Die Bestimmung des mittleren Durchmessers $d_{50}$ wird auf einem Master Sizer der Firma Malvern Instruments, GB, mittels Laserscannung durchgeführt [andere Messgeräte sind z. B. Horiba LA 500 (Horiba Europe GmbH, DE) oder Helos (Sympathec, DE), welche das gleiche Messprinzip verwenden)]. Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert [auch Median genannt, vgl. Figur 1, $\Phi(d)$ = (relative) Summe der Partikel].

**Messung der SPAN98**

Die Bestimmung des Streumaßes, der SPAN98, wird mit dem gleichen Messgerät durchgeführt wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}} \, .$$

Der Ermittlung von $d_{98}$ und $d_{10}$ wird wiederum die (relative) Summenkurve der Partikelgrößenverteilung zu Grunde gelegt. Der Schnittpunkt des 98 %-Ordinatenwertes mit der Summenkurve liefert auf der Abszissenachse sofort den gewünschten $d_{98}$-Wert, und der Schnittpunkt des 10 %-Ordinatenwertes der Summenkurve mit der Kurve liefert auf der Abszissenachse den gewünschten $d_{10}$-Wert (vgl. Figur 2). Die Transparenz wird mit einem Haze TC der Firma Pausch Messtechnik, DE, oder Hazegard-plus der Firma Byk-Gardner, USA, nach ASTM D 1003-61 gemessen.

**Topographie**

Die Topographie der Oberfläche wird mit einem Weißlicht-Interferometrie-Mikroskop der Firma Veeco, Typ Wyko NT3300 bestimmt. Gemessen wird eine Fläche von 0,92 mm x 1,21 mm (480 x 736 Pixel) bei 5,1-facher Vergrößerung. Zur Messung wird die Probe in einen Ring (Durchmesser 40 mm) eingespannt Die Messung erfolgt im VSI-Modus (phase shifting interferometry). Die Messlänge in z-Richtung wird auf 20 $\mu$m festgelegt. Eine eventuelle Welligkeit des Musters wird herausgefiltert.
Zur Analyse der Erhebungen wird die so genannte Multi Region Analysis verwendet. Hierbei wird die Messfläche nach zusammenhängenden Regionen untersucht, die höher als 1,5 $\mu$m sind. Allerdings werden nur Regionen berücksichtigt, die eine Größe von mindestens 5 Bildpunkten haben. Ein Beispiel ist in Figur 3 gezeigt.

**Kontaktwinkel mit Wasser**

Die Polarität der Oberfläche wird durch eine Randwinkelmessung von destilliertem Wasser bestimmt. Die Messung findet bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokulars der Kontaktwinkel abgelesen wird (Messung des Fortschreitwinkels). Aus 5 Messungen wird der Mittelwert gebildet.
Im Folgenden wird die Erfindung an Hand von Beispielen näher erläutert.

**Beispiel 1**

Polyethylenterephthalat und Polyethylenterephthalat enthaltend Titandioxid als Weißpigment wurden getrocknet und dem Extruder für die Basisschicht (B) zugeführt. Ebenfalls wurden Polyethylenterephthalat und Polyethylenterephthalat enthaltend Titandioxid als Weißpigment und Polyethylenterephtalat enthaltend das weitere Pigment getrocknet und dem Extruder für die Deckschicht (A) zugeführt.
Dann wurde durch Coextrusion und anschließende stufenweise Orientierung in Längs- und Querrichtung eine weiße zweischichtige Folie mit AB-Aufbau und einer Gesamtdicke von 50 $\mu$m hergestellt. Die Dicke der Deckschicht betrug 2 $\mu$m.

Basisschicht (B):

| | |
|---|---|
| 86 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

Deckschicht (A), Mischung aus:

| | |
|---|---|
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
| 70 Gew.-% | Polyesterrohstoff, bestehend aus 95 Gew.-% (Copolyester aus 78 Mol-% Terephthalsäure, 22 Mol-% Isophthalsäure und 100 Mol-% Ethylenglykol) und 5,0 Gew.-% Kieselsäurepartikel (Sylysia 430 |

(fortgesetzt)

| | | | | | |
|---|---|---|---|---|---|
| 16 Gew.-% | Polyesterrohstoff, bestehend aus 95 Gew.-% (Polyester aus 99 Mol-% Terephthalsäure, 1 Mol-% Isophthalsäure und 100 Mol-% Ethylenglykol) und 5 Gew.-% Kieselsäurepartikel (Sylysia 430 von der Fa. Fuji, JP) mit einem $d_{50}$-Wert von 3,4 $\mu$m und SPAN98 von 1,6 und einem SV-Wert von 800 | | | | |

von der Fa. Fuji, JP) mit einem $d_{50}$-Wert von 3,4 $\mu$m und SPAN98 von 1,6 und einem SV-Wert von 800

Die Herstellungsbedingungen in den einzelnen Verfahrensschritten waren:

| | | | | |
|---|---|---|---|---|
| Extrusion | Temperaturen | A-Schicht: | 280 | °C |
| | | B-Schicht: | 280 | °C |
| | | C-Schicht: | 280 | °C |
| | Temperatur der Abzugswalze | | 20 | °C |
| Längsstreckung | Temperatur | | 70-120 | °C |
| | Längsstreckverhältnis | | 3,2 | |
| Querstreckung | Temperatur | | 80-135 | °C |
| | Querstreckverhältnis | | 3,8 | |
| Fixierung | Temperatur | | 230 | °C |
| | Dauer | | 3 | s |

Es wurde eine Folie mit einem hohen Mattgrad, mit sehr gutem Wickelverhalten, einer sehr guten Wickelqualität und einem sehr guten Verarbeitungsverhalten erhalten.

**Beispiel 1a**

Es wurde eine Folie wie in Beispiel 1 beschrieben hergestellt, jedoch wurde nach der Fixierung die Folie einer Coronabehandlung (2 kW/m$^2$) unterworfen. Es wurde eine Folie mit einem hohen Mattgrad, mit sehr gutem Wickelverhalten, einer sehr guten Wickelqualität und einem sehr guten Verarbeitungsverhalten erhalten. Die Deckschicht (A) der Folie hatte die gewünschte verbesserte Haftung, der Kontaktwinkel zu Wasser betrug 63,7°.

**Beispiel 1b**

Die Folie wurde wie in Beispiel 1a hergestellt, jedoch ohne Coronabehandlung nach dem biaxialen Strecken. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid, wurde nach dem folgenden Verfahren als Haftvermittlerbeschichtung auf die A-Schicht der Polyesterfolie aufgebracht:

Die längsgestreckte Folie wurde coronabehandelt (8 kW/m$^2$) und danach durch Reversgravurbeschichtung auf der A-Schicht mit dem oben beschriebenen Latex beschichtet.

Die biaxial gestreckte Folie wurde bei 230 °C thermofixiert. Das Trockengewicht der Beschichtung betrug ca. 0,035 g/m$^2$ bei einer Beschichtungsdicke von etwa 40 nm.

Die wünschenswerten und erfindungsgemäßen Eigenschaften der Folie waren wie in Beispiel 1a. Der Kontaktwinkel zu Wasser der A-Schichtoberfläche betrug 63,9°. Die Folie wurde auf ihre reprografische Haftung geprüft und ergab eine gute Haftung.

**Beispiel 1c**

Die Folie wurde wie in Beispiel 1b hergestellt. Eine wässrige Dispersion mit 6 Gew.-% Copolyester, bestehend aus 95 Mol-% Isophthalat, 5 Mol-% Na-5-Sulfoisophtalat und 100 Mol-% Ethylenglykol, und 0,56 Gew.-% kolloidalem SiO$_2$ wurde nach dem folgenden Verfahren als Beschichtung auf die Polyesterfolie aufgebracht:

Die längsgestreckte Folie wurde durch Reversgravurbeschichtung auf der A-Schicht mit der oben beschriebenen Copolyesterdispersion beschichtet.

Die biaxial gestreckte Folie wurde bei 230 °C thermofixiert. Das Trockengewicht der Beschichtung betrug ca.

0,030 g/m$^2$ bei einer Beschichtungsdicke von etwa 35 nm.

Der Kontaktwinkel zu Wasser betrug 57°.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden etwa 500 Å Aluminium sowohl auf die unbeschichtete Seite als auch auf die beschichtete Probe aufgedampft.

Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und mit etwa dem gleichen Druck leicht über die Metalloberfläche gerieben. Das "Abriebverhalten" der beschichteten Seite der Folie wurde als gut bewertet. Das "Abriebverhalten" der unbeschichteten Seite wurde als schlecht bewertet.

### Beispiel 1d

Die Folie wurde wie in Beispiel 1a hergestellt, jedoch ohne Coronabehandlung nach dem biaxialen Strecken. Eine wässrige Dispersion mit 7 Gew.-% Feststoffgehalt, bestehend aus 50 Gew.-% aromatischem Copolyester (Copolyester enthaltend 90 Mol-% Terephthalat, 10 Mol-% 5-Natriumsulfoisophthalat, 80 Mol-% Ethylenglykol und 20 Mol-% Diethylenglykol), 45 Gew.-% wasserdispergierbarem Polymer (Polyvinylalkohol mit einem Verseifungsgrad von 88 Mol-% und einem Polymerisationsgrad von 1.700) und 5 Gew.-% an inerten Partikeln (kolloidales SiO$_2$ mit einem Partikeldurchmesser von 0,05 $\mu$m), wurde nach dem folgenden Verfahren als Beschichtung auf eine Polyesterfolie aufgebracht:

Die längsgestreckte Folie wurde durch Reversgravurbeschichtung mit der oben beschriebenen Copolyesterdispersion auf der Deckschicht (A) beschichtet. Das Trockengewicht der Beschichtung betrug ca. 0,040 g/m$^2$ bei einer Beschichtungsdicke von etwa 0,05 $\mu$m.

Der Kontaktwinkel zu Wasser betrug 49,7°:

Zur Beurteilung der Haftvermittlerwirkung der Beschichtung wurde eine wässrige Polyvinylacetal-Lösung (S-Lec KX-1, hergestellt von Sekisui Chemical Co., Ltd.; im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 $\mu$m aufgebracht. Die beschichtete Folie wurde unverzüglich zum Trocknen bei 100 °C für 4 min in einen Ofen gestellt. Ein schwarzes Quadrat (Fläche: 12 x 12 cm) wurde mit einem Ink-Jet-Drucker (BJC-600J, Canon Inc.) auf die Oberfläche der getrockneten KX-1-Beschichtung gedruckt und für 12 h bei 23 °C und 50 % relativer Luftfeuchtigkeit unter Luft getrocknet. Ein Klebeband (Cello-tape, Nichiban Inc., Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

### Beispiel 2

Im Vergleich zu Beispiel 1 wurde jetzt eine ABA-Folie hergestellt und die Zusammensetzung der Deckschichten (A) geändert. Die Gesamtdicke der Folie betrug 60 $\mu$m. Die Dicke der Deckschichten betrug 3 $\mu$m. Alle anderen Parametern wurden beibehalten.

| | |
|---|---|
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
| 30 Gew.-% | Polyesterrohstoff, bestehend aus 95 Gew.-% (Copolyester aus 78 Mol-% Terephthalsäure, 22 Mol-% Isophthalsäure und 100 Mol-% Ethylenglykol) und 5 Gew.-% Kieselsäurepartikel (Sylysia 430 von der Fa. Fuji, JP) mit einem d$_{50}$-Wert von 3,4 $\mu$m und SPAN98 von 1,6 und einem SV-Wert von 800 |
| 36 Gew.-% | Polyesterrohstoff, bestehend aus 95 Gew.-% (Polyester aus 99 Mol-% Terephthalsäure, 1 Mol-% Isophthalsäure und 100 Mol-% Ethylenglykol) und 5 Gew.-% Kieselsäurepartikel (Sylysia 430 von der Fa. Fuji, JP) mit einem d$_{50}$-Wert von 3,4 $\mu$m und SPAN98 von 1,6 und einem SV-Wert von 800 |
| 20 Gew.-% | Polyethylenterephthalat mit einem SV-Wert von 800 |

**Beispiel 3**

Im Vergleich zu Beispiel 1 wurde jetzt eine ABA-Folie hergestellt und die Zusammensetzung der Deckschichten (A) und der Basis (B) geändert. Die Gesamtdicke der Folie betrug 50 $\mu$m. Die Dicke der Deckschichten betrug 2 $\mu$m. Alle anderen Parameter wurden beibehalten.

Basisschicht (B):

| 90 Gew.-% | Polyethylenterephthalat mit einem SV-Wert von 800 |
|---|---|
| 10 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

Deckschicht (A), Mischung aus:

| 10 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
|---|---|
| 50 Gew.-% | Polyesterrohstoff, bestehend aus 95 Gew.-% (Copolyester aus 78 Mol-% Terephthalsäure, 22 Mol-% Isophthalsäure und 100 Mol-% Ethylenglykol) und 5 Gew.-% Kieselsäurepartikel (Sylysia 430 von der Fa. Fuji, JP) mit einem $d_{50}$-Wert von 3,4 $\mu$m und SPAN98 von 1,6 und einem SV-Wert von 800 |
| 40 Gew.-% | Polyesterrohstoff, bestehend aus 95 Gew.-% (Polyester aus 99 Mol-% Terephthalsäure, 1 Mol-% Isophthalsäure und 100 Mol-% Ethylenglykol) und 5 Gew.-% Kieselsäurepartikel (Sylysia 430 von der Fa. Fuji, JP) mit einem $d_{50}$-Wert von 3,4 $\mu$m und SPAN98 von 1,6 und einem SV-Wert von 800 |

**Beispiel 4**

Im Vergleich zu Beispiel 1 wurde jetzt eine ABC-Folie hergestellt und die Zusammensetzung der Deckschichten (A) und (C) und der Basisschicht (B) geändert. Alle anderen Parameter (Herstellungsbedingungen) wurden beibehalten. Die Gesamtdicke der Folie betrug 25 $\mu$m. Die Dicke der Deckschichten betrug 1,5 $\mu$m.

Deckschicht (A)

| 20 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
|---|---|
| 80 Gew.-% | Polyesterrohstoff, bestehend aus 95 Gew.-% (Copolyester aus 82 Mol-% Terephthalsäure, 18 Mol-% Isophthalsäure und 100 Mol-% Ethylenglykol) und 5 Gew.-% Kieselsäurepartikel (Sylysia 430 von der Fa. Fuji, JP) mit einem $d_{50}$-Wert von 3,4 $\mu$m und SPAN98 von 1,6 und einem SV-Wert von 800 |

Basisschicht (B)

| 80 Gew.-% | Polyethylenterephthalat mit einem SV-Wert von 800 |
|---|---|
| 20 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

Deckschicht (C)

| 92 Gew.-% | Polyethylenterephthalat mit einem SV-Wert von 800 |
|---|---|
| 8 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

**Vergleichsbeispiel 1**

Im Vergleich zu Beispiel 1 wurde jetzt nur die Zusammensetzung der Deckschichten (A) geändert. Es wurden die weiteren Partikel in den Deckschichten weggelassen. Alle anderen Parameter wurden beibehalten.

Deckschicht (A), Mischung aus:

| | |
|---|---|
| 86 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |

Die Folie hatte nicht mehr das gewünschte matte Erscheinungsbild. Der Glanz war zu hoch und die Rauheit zu gering.

**Vergleichsbeispiel 2**

Es wurde das Beispiel 4 aus EP-A-1 442 875 nachgearbeitet. Die transparente Folie hatte die erforderliche Rauheit und den erforderlichen Glanz, jedoch nicht die erforderliche Transparenz und den erforderlichen Weißgrad.

**Vergleichsbeispiel 3**

Im Vergleich zu Beispiel 1 wurde jetzt nur die Zusammensetzung der Deckschichten (A) geändert. Es wurden die weiteren Partikel in den Deckschichten weggelassen. Alle anderen Parameter wurden beibehalten.

Deckschicht (A), Mischung aus:

| | |
|---|---|
| 16 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800 |
| 70 Gew.-% | Masterbatch aus 95 Gew.-% Polyethylenterephthalat und 5 Gew.-% Kieselsäurepartikel (Sylysia 430 von der Fa. Fuji, JP) mit einem $d_{50}$-Wert von 3,4 $\mu$m und einem SV-Wert von 800 |

Die Folie hatte nicht mehr das gewünschte matte Erscheinungsbild. Der Glanz war zu hoch und die Rauheit zu gering.

Die Ergebnisse der Beispiele/Vergleichsbeispiele sind in Tabelle 2 zusammengefasst.

## Tabelle 2

| | | Weißgrad der Folie | Trans-parenz [%] | Glanz (Messwinkel 60°) A-Seite (weiß, matte Seite) | Mittlere Rauigkeit $R_a$ der A-Seite [nm] | Reibungswert COF A-Seite gegen A-Seite | Topographie [Erhebungen >1,5 μm / mm²] A-Seite | Kontaktwinkel [°] |
|---|---|---|---|---|---|---|---|---|
| Beispiel | 1 | 93 | 30 | 26 | 350 | 0,32 | 296 | - |
| | 2 | 94 | 27 | 30 | 310 | 0,34 | 248 | - |
| | 3 | 92 | 35 | 27 | 335 | 0,35 | 288 | - |
| | 4 | 92 | 35 | 35 | 290 | 0,30 | 210 | - |
| Beispiel | 1a | 93 | 30 | 26 (vor Besch.) | 350 (vor Besch.) | 0,32 (vor Besch.) | 296 | 63,7 |
| | 1b | 93 | 30 | 26 (vor Besch.) | 350 (vor Besch.) | 0,32 (vor Besch.) | 296 | 63,9 |
| | 1c | 93 | 30 | 26 (vor Besch.) | 350 (vor Besch.) | 0,32 (vor Besch.) | 296 | 57,0 |
| | 1d | 93 | 30 | 26 (vor Besch.) | 350 (vor Besch.) | 0,32 (vor Besch.) | 296 | 49,7 |
| V-Beispiel | 1 | 92 | 30 | 65 | 60 | 0,25 | 10 | - |
| | 2[1] | 17 | 87 | 42 | 320 | 0,28 | 195 | - |
| | 3 | 93 | 28 | 71 | 80 | 0,27 | 8 | - |

[1] In B4 der EP-A-1 442 875 ist der Weißgrad nach Berger nicht enthalten. Die Folie wurde nachgestellt, und der Weißgrad nach Berger wurde gemessen. Alle anderen Messergebnisse wurden überprüft und stimmten mit dem B4 in EP-A-1 442 875 überein.

EP 1 900 515 B1

**Patentansprüche**

1. Polyesterfolie, die mindestens eine weiße Basisschicht (B) und mindestens eine matte Deckschicht (A) aufweist, **dadurch gekennzeichnet, dass**

    a. die Basisschicht (B) Weißpigment in einer Konzentration von 3 bis 15 Gew.-% enthält (bezogen auf das Gewicht der Basisschicht (B)),
    b. die Deckschicht (A) Weißpigment in einer Konzentration von 2 bis 15 Gew.-% enthält (bezogen auf das Gewicht der Deckschicht (A)) und
    c. die Deckschicht (A) weitere, von dem Weißpigment verschiedene Partikel enthält, die einen mittleren Partikeldurchmesser $d_{50}$ von 2 bis 10 $\mu$m aufweisen, und
    d. die Deckschicht (A) aus einem Polyester aufgebaut ist, der 4 bis 30 Mol-% Isophthalsäureeinheiten und 70 bis 96 Mol-% Terephthalsäureeinheiten aufweist (bezogen auf die Gesamtsäuremenge des Polyesters in dieser Schicht).

2. Polyesterfolie nach Anspruch 1, **dadurch gekennzeichnet, dass** das Weißpigment ausgewählt ist aus der Gruppe: Titandioxid, Bariumsulfat, Zinksulfid, Zinkoxid und Mischungen derselben.

3. Polyesterfolie nach Anspruch 2, **dadurch gekennzeichnet, dass** das Weißpigment $TiO_2$ ist.

4. Polyesterfolie nach Anspruch 3, **dadurch gekennzeichnet, dass** die Korngröße des Titandioxids zwischen 0,05 und 0,5 $\mu$m liegt.

5. Polyesterfolie nach Anspruch 3 oder 4, **dadurch gekennzeichnet, dass** das Titandioxid vom Rutil-Typ ist.

6. Polyesterfolie nach einem der Ansprüche 1 bis 5, **dadurch gekennzeichnet, dass** die von Weißpigment verschiedenen Partikel ausgewählt werden aus Calciumcarbonat, amorpher Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salzen der eingesetzten Dicarbonsäuren, Kaolin, vernetzten Polymerpartikeln und Mischungen dieser Partikel.

7. Polyesterfolie nach einem der Ansprüche 1 bis 6, **dadurch gekennzeichnet, dass** die von Weißpigment verschiedenen Partikel synthetisch hergestellte $SiO_2$-Partikel (in kolloidaler Form) sind.

8. Polyesterfolie nach einem der Ansprüche 1 bis 7, **dadurch gekennzeichnet, dass** die Rauigkeit der matten Seite der Folie im Bereich von 150 bis 1000 nm liegt.

9. Polyesterfolie nach einem der Ansprüche 1 bis 8, **dadurch gekennzeichnet, dass** die Oberfläche der matten Seite der Folie >100 bis <1500 Erhebungen pro mm$^2$ aufweist, die größer als 1,5 $\mu$m sind.

10. Polyesterfolie nach einem der Ansprüche 1 bis 9, **dadurch gekennzeichnet, dass** die Folie aus drei Schichten, der Basisschicht (B) und beidseitig auf dieser Basisschicht aufgebrachten Deckschichten (A) und (C) besteht, wobei die Deckschichten (A) und (C) gleich oder verschieden sind.

11. Polyesterfolie nach einem der Ansprüche 1 bis 10, **dadurch gekennzeichnet, dass** sie einen Weißgrad nach Berger von größer als 75 aufweist.

12. Polyesterfolie nach einem der Ansprüche 1 bis 11, **dadurch gekennzeichnet, dass** die Deckschicht (A) einen Glanz (60°) von kleiner als 50 aufweist.

13. Polyesterfolie nach einem der Ansprüche 1 bis 12, **dadurch gekennzeichnet, dass** sie eine Transparenz von kleiner als 50 % aufweist.

14. Polyesterfolie nach einem der Ansprüche 1 bis 13, **dadurch gekennzeichnet, dass** mindestens eine Oberfläche der Folie durch eine Behandlung funktionalisiert ist.

15. Polyesterfolie nach Anspruch 14, **dadurch gekennzeichnet, dass** die Behandlung eine Coronabehandlung ist.

**16.** Polyesterfolie nach Anspruch 13 oder 14, **dadurch gekennzeichnet, dass** die Behandlung eine Beschichtung der Folie ist.

**17.** Polyesterfolie nach Anspruch 16, **dadurch gekennzeichnet, dass** die Beschichtung eine Acrylatbeschichtung ist.

**18.** Polyesterfolie nach Anspruch 16, **dadurch gekennzeichnet, dass** die Beschichtung eine Beschichtung mit einem aminofunktionalen Silan ist.

**19.** Polyesterfolie nach Anspruch 16, **dadurch gekennzeichnet, dass** die Beschichtung eine hydrophile Beschichtung ist.

**20.** Polyesterfolie nach Anspruch 16, **dadurch gekennzeichnet, dass** die Beschichtung eine Copolyesterbeschichtung ist.

**21.** Verfahren zur Herstellung einer Polyesterfolie nach Anspruch 1 umfassend die Schritte:

a) Herstellen einer mehrschichtigen Folie, zumindest umfassend eine Basisschicht (B) und eine Deckschicht (A) durch Coextrusion und Ausformen der Schmelzen zu flachen Schmelzefilmen,
b) biaxiales Strecken der Folie und
c) Thermofixieren der gestreckten Folie,
**dadurch gekennzeichnet, dass** die Basisschicht (B) Weißpigment in einer Konzentration von 3 bis 15 Gew.-% enthält (bezogen auf das Gewicht der Basisschicht (B)), die Deckschicht (A) Weißpigment in einer Konzentration von 2 bis 15 Gew.-% enthält (bezogen auf das Gewicht der Deckschicht (A)) und die Deckschicht (A) weitere, von dem Weißpigment verschiedene Partikel enthält, die einen mittleren Partikeldurchmesser $d_{50}$ von 2 bis 10 $\mu$m aufweisen, und die Deckschicht (A) aus einem Polyester aufgebaut ist, der 4 bis 30 Mol-% Isophthalsäureeinheiten und 70 bis 96 Mol-% Terephthalsäureeinheiten aufweist (bezogen auf die Gesamtsäuremenge des Polyesters in dieser Schicht).

**22.** Verwendung einer Polyesterfolie nach einem der Ansprüche 1 bis 20 als flexible Verpackungsfolie, insbesondere für Nahrungs- und Genussmittel.

**23.** Verwendung einer Polyesterfolie nach Anspruch 22 als Deckelfolie für Lebensmittelbehältnisse, insbesondere Joghurtbecher.

**24.** Verwendung einer Polyesterfolie nach Anspruch 22 oder 23, **dadurch gekennzeichnet, dass** der Verpackungsvorgang auf schnelllaufenden Verpackungsmaschinen erfolgt.

**Claims**

**1.** Polyester film which has at least one white base layer (B) and at least one matt outer layer (A), **characterized in that**

a. the base layer (B) comprises white pigment at a concentration of from 3 to 15 % by weight (based on the weight of the base layer (B)),
b. the outer layer (A) comprises white pigment at a concentration of from 2 to 15 % by weight (based on the weight of the outer layer (A)) and
c. the outer layer (A) comprises other particles which differ from the white pigment, the median diameter $d_{50}$ of these being from 2 to 10 $\mu$m, and
d. the outer layer (A) is composed of a polyester which has from 4 to 30 mol % composed of isophthalic acid units and from 70 to 96 mol % of terephthalic acid units (based on the total quantity of acid in the polyester in this layer).

**2.** Polyester film according to Claim 1, **characterized in that** the white pigment is selected from the following group: titanium dioxide, barium sulphate, zinc sulphide, zinc oxide and mixtures of these.

**3.** Polyester film according to Claim 2, **characterized in that** the white pigment is $TiO_2$.

**4.** Polyester film according to Claim 3, **characterized in that** the grain size of the titanium dioxide is from 0.05 to 0.5 $\mu$m.

5. Polyester film according to Claim 3 or 4, **characterized in that** the titanium dioxide is of rutile type.

6. Polyester film according to any of Claims 1 to 5, **characterized in that** the particles different from white pigment are selected from calcium carbonate, amorphous silicon, talc, magnesium carbonate, barium carbonate, calcium sulphate, lithium phosphate, calcium phosphate, magnesium phosphate, aluminium oxide, lithium fluoride, calcium, barium, zinc and manganese salts of the dicarboxylic acids used, kaolin, crosslinked polymer particles and mixtures of these particles.

7. Polyester film according to any of Claims 1 to 6, **characterized in that** the particles different from white pigment are synthetic $SiO_2$ particles (in colloidal form).

8. Polyester film according to any of Claims 1 to 7, **characterized in that** the roughness of the matt side of the film is in the range from 150 to 1000 nm.

9. Polyester film according to any of Claims 1 to 8, **characterized in that** the surface of the matt side of the film has, per $mm^2$, from > 100 to < 1500 elevations with dimension more than 1.5 $\mu$m.

10. Polyester film according to any of Claims 1 to 9, **characterized in that** the film is composed of three layers: the base layer (B) and outer layers (A) and (C) applied on the two sides of this base layer, where the outer layers (A) and (C) are identical or different.

11. Polyester film according to any of Claims 1 to 10, **characterized in that** its Berger whiteness is greater than 75.

12. Polyester film according to any of Claims 1 to 11, **characterized in that** the gloss (60 °) of the outer layer (A) is below 50.

13. Polyester film according to any of Claims 1 to 12, **characterized in that** its transparency is less than 50 %.

14. Polyester film according to any of Claims 1 to 13, **characterized in that** at least one surface of the film has been functionalized by a treatment.

15. Polyester film according to Claim 14, **characterized in that** the treatment is a corona treatment.

16. Polyester film according to Claim 13 or 14, **characterized in that** the treatment is a coating of the film.

17. Polyester film according to Claim 16, **characterized in that** the coating is an acrylate coating.

18. Polyester film according to Claim 16, **characterized in that** the coating is a coating with an amino-functional silane.

19. Polyester film according to Claim 16, **characterized in that** the coating is a hydrophilic coating.

20. Polyester film according to Claim 16, **characterized in that** the coating is a copolyester coating.

21. Process for the production of a polyester film according to Claim 1 comprising the following steps:

    a) production of a multilayer film at least comprising a base layer (B) and an outer layer (A) by coextrusion and shaping of the melts to give flat melt films,
    b) biaxial stretching of the film and
    c) heat-setting of the stretched film, **characterized in that** the base layer (B) comprises white pigment at a concentration of from 3 to 15 % by weight (based on the weight of the base layer (B)), the outer layer (A) comprises white pigment at a concentration of from 2 to 15 % by weight (based on the weight of the base layer (A)) and the outer layer (A) comprises other particles which differ from the white pigment, the median diameter $d_{50}$ of these being from 2 to 10 $\mu$m, and the outer layer (A) is composed of a polyester which has from 4 to 30 mol % composed of isophthalic acid units and from 70 to 96 mol % of terephthalic acid units (based on the total quantity of acid in the polyester in this layer).

22. Use of a polyester film according to any of Claims 1 to 20 as flexible packaging film, in particular for foods and other consumable items.

**23.** Use of a polyester film according to Claim 22 as lid film for containers for food or drink, in particular yoghurt pots.

**24.** Use of a polyester film according to Claim 22 or 23, **characterized in that** the packaging procedure takes place on high-speed packaging machines.

**Revendications**

**1.** Feuille de polyester, qui présente au moins une couche de base blanche (B) et au moins une couche de recouvrement matte (A), **caractérisée en ce que**

a. la couche de base (B) contient un pigment blanc d'une concentration de 3 à 15 % en poids (par rapport au poids de la couche de base (B)),
b. la couche de recouvrement (A) contient un pigment blanc d'une concentration de 2 à 15 % en poids (par rapport au poids de la couche de recouvrement (A)) et
c. la couche de recouvrement (A) contient d'autres particules différentes du pigment blanc, qui présentent un diamètre de particules moyen $d_{50}$ de 2 à 10 $\mu$m, et
d. la couche de recouvrement (A) est composée d'un polyester, qui présente 4 à 30 % molaire d'unités d'acide isophtalique et 70 à 96 % molaire d'unités d'acide téréphtalique (par rapport à la quantité d'acide totale du polyester dans cette couche).

**2.** Feuille de polyester selon la revendication 1, **caractérisée en ce que** le pigment blanc est sélectionné parmi le groupe : oxyde de titane, sulfate de baryum, sulfure de zinc, oxyde de zinc et leurs mélanges.

**3.** Feuille de polyester selon la revendication 2, **caractérisée en ce que** le pigment blanc est $TiO_2$.

**4.** Feuille de polyester selon la revendication 3, **caractérisée en ce que** la dimension granulaire du dioxyde de titane se situe entre 0,05 et 0,5 $\mu$m.

**5.** Feuille de polyester selon la revendication 3 ou 4, **caractérisée en ce que** le dioxyde de titane est de type rutile.

**6.** Feuille de polyester selon l'une quelconque des revendications 1 à 5, **caractérisée en ce que** les particules différentes du pigment blanc sont sélectionnées parmi le carbonate de calcium, l'acide silicique amorphe, le talc, le carbonate de magnésium, le carbonate de baryum, le sulfate de calcium, le phosphate de lithium, le phosphate de calcium, le phosphate de magnésium, l'oxyde d'aluminium, le fluorure de lithium, les sels de calcium, de baryum, de zinc ou de manganèse des acides dicarboxyliques employés, du kaolin, des particules de polymère réticulées et des mélanges de ces particules.

**7.** Feuille de polyester selon l'une quelconque des revendications 1 à 6, **caractérisée en ce que** les particules différentes du pigment blanc sont des particules de $SiO_2$ (sous forme colloïdale) fabriquées synthétiquement.

**8.** Feuille de polyester selon l'une quelconque des revendications 1 à 7, **caractérisée en ce que** la rugosité du côté mat de la feuille se situe dans la plage de 150 à 1000 nm.

**9.** Feuille de polyester selon l'une quelconque des revendications 1 à 8, **caractérisée en ce que** la surface du côté mat de la feuille présente > 100 à < 1500 élévations par mm$^2$, qui sont supérieures à 1,5 $\mu$m.

**10.** Feuille de polyester selon l'une quelconque des revendications 1 à 9, **caractérisée en ce que** la feuille se compose de trois couches, la couche de base (B) et des couches de recouvrement (A) et (C) appliquées des deux côtés de cette couche de base, dans laquelle les couches de recouvrement (A) et (C) sont identiques ou différentes.

**11.** Feuille de polyester selon l'une quelconque des revendications 1 à 10, **caractérisée en ce qu'**elle présente un degré de blanc selon Berger supérieur à 75.

**12.** Feuille de polyester selon l'une quelconque des revendications 1 à 11, **caractérisée en ce que** la couche de recouvrement (A) a une brillance (60°) inférieure à 50.

**13.** Feuille de polyester selon l'une quelconque des revendications 1 à 12, **caractérisée en ce qu'**elle présente une transparence inférieure à 50 %.

**14.** Feuille de polyester selon l'une quelconque des revendications 1 à 13, **caractérisée en ce qu'**au moins une surface de la feuille est fonctionnalisée par un traitement.

**15.** Feuille de polyester selon la revendication 14, **caractérisée en ce que** le traitement est un traitement corona.

**16.** Feuille de polyester selon la revendication 13 ou 14, **caractérisée en ce que** le traitement est un revêtement de la feuille.

**17.** Feuille de polyester selon la revendication 16, **caractérisée en ce que** le revêtement est un revêtement acrylate.

**18.** Feuille de polyester selon la revendication 16, **caractérisée en ce que** le revêtement est un revêtement avec un silane à fonction amine.

**19.** Feuille de polyester selon la revendication 16, **caractérisée en ce que** le revêtement est un revêtement hydrophile.

**20.** Feuille de polyester selon la revendication 16, **caractérisée en ce que** le revêtement est un revêtement copolyester.

**21.** Procédé de fabrication d'une feuille de polyester selon la revendication 1 comprenant les étapes de :

a) fabrication d'une feuille à plusieurs couches, comprenant au moins une couche de base (B) et une couche de recouvrement (A) par coextrusion et formage des matières en fusion en feuilles en fusion plats,
b) étirage biaxial de la feuille et
c) thermofixation de la feuille étirée,

**caractérisé en ce que** la couche de base (B) contient un pigment blanc d'une concentration de 3 à 15 % en poids (par rapport au poids de la couche de base (B)), la couche de recouvrement (A) contient un pigment blanc d'une concentration de 2 à 15 % en poids (par rapport au poids de la couche de recouvrement (A)) et la couche de recouvrement (A) contient d'autres particules différentes du pigment blanc, qui présentent un diamètre de particules moyen $d_{50}$ de 2 à 10 $\mu$m, et la couche de recouvrement (A) est composée d'un polyester qui présente 4 à 30 % molaire d'unités d'acide isophtalique et 70 à 96 % molaire d'unités d'acide téréphtalique (par rapport à la quantité d'acide totale du polyester dans cette couche).

**22.** Utilisation d'une feuille de polyester selon l'une quelconque des revendications 1 à 20 en tant que feuille d'emballage souple, en particulier pour les produits alimentaires et denrées de luxe.

**23.** Utilisation d'une feuille de polyester selon la revendication 22 en tant que feuille couvercle pour les récipients alimentaires, en particulier des pots de yaourt.

**24.** Utilisation d'une feuille de polyester selon la revendication 22 ou 23, **caractérisée en ce que** l'opération d'emballage a lieu sur des machines d'emballage rapides.

**Figur 1**

**Figur 2**

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0347646 A
- EP 0053498 A
- DE 2353347 A
- US 3154461 A
- EP 0605130 B
- EP 1176004 A
- EP 1529636 A
- WO 9413476 A
- EP 0144878 A
- US 4252885 A
- EP 0296620 A
- WO 9413481 A
- EP 0359017 B
- EP 1442875 A

**In der Beschreibung aufgeführte Nicht-Patentliteratur**

- **HANSL LOOS.** Farbmessung. Verlag Beruf und Schule, 1989